Europäisches Patentamt

European Patent Office

Office européen des brevets

(19)

(11) Numéro de publication : **0 146 465**
**B1**

(12) **FASCICULE DE BREVET EUROPÉEN**

(45) Date de publication du fascicule du brevet :
09.11.88

(51) Int. Cl.⁴ : **G 09 B 9/00**

(21) Numéro de dépôt : **84402518.9**

(22) Date de dépôt : **06.12.84**

(54) **Ensemble mobile destiné à l'entraînement de personnel en vue de sa spécialisation dans la lutte contre le feu.**

(30) Priorité : **14.12.83 FR 8320161**

(43) Date de publication de la demande :
**26.06.85 Bulletin 85/26**

(45) Mention de la délivrance du brevet :
**09.11.88 Bulletin 88/45**

(84) Etats contractants désignés :
**AT BE CH DE FR GB IT LI LU NL SE**

(56) Documents cités :
**US-A- 3 675 342**
**US-A- 3 675 343**
**US-A- 4 001 949**
**US-A- 4 299 579**
**US-A- 4 303 396**

(73) Titulaire : **Deshoux, Thierry**
**Arbourg**
**F-44410 Herbignac (FR)**

**Jaunasse, Jacques**
**9, le Clos Martin**
**F-56130 Nivillac (FR)**

**Seignard, Marcel**
**Les Maguers**
**F-56190 Arzal (FR)**

(72) Inventeur : **Deshoux, Thierry**
**Arbourg**
**F-44410 Herbignac (FR)**
Inventeur : **Jaunasse, Jacques**
**9, le Clos Martin**
**F-56130 Nivillac (FR)**
Inventeur : **Seignard, Marcel**
**Les Maguers**
**F-56190 Arzal (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

L'invention concerne un ensemble mobile destiné à l'entraînement de personnel en vue de sa spécialisation dans la lutte contre le feu.

Il existe un certain nombre de techniques d'entraînement à la lutte contre l'incendie, mais, en général, l'ensemble de ces moyens sont concentrés en un lieu déterminé, ce qui oblige les stagiaires à se déplacer quelquefois très loin de leur lieu de travail habituel. Il en résulte un désagrément pour le stagiaire lui-même ainsi que pour son employeur.

Par le document US-A-4 001 949, il a déjà été proposé une installation d'entraînement de personnel à la lutte contre le feu, qui comprend un caisson mobile (du genre remorque) contenant des moyens de simulation d'un incendie. Ces moyens comprennent un écran placé devant le stagiaire, sur lequel sont projetées des images représentant un incendie réel ; l'entraînement est piloté par un ordinateur.

Il est clair qu'une telle installation ne reproduit qu'imparfaitement les conditions et l'ambiance d'un sinistre réel ; le jour où le stagiaire se trouvera face à un vrai sinistre, n'ayant pas été accoutumé à cette situation, il risquera de perdre son sang froid et de succomber à la panique.

De plus, cette installation sophistiquée est coûteuse, d'utilisation et de maintenance délicates, difficilement compatibles avec sa mobilité.

On a aussi proposé par ailleurs — par exemple dans le document US-A-4 303 396 — une installation d'entraînement fixe, dans laquelle il est possible de générer un feu au moyen d'un brûleur, afin de simuler un incendie qui se développe dans une salle de machines. Toutefois, ce genre d'installation ne s'adresse qu'à une catégorie particulière de stagiaires, déjà spécialisés, et n'offre que des possibilités très limitées d'utilisation.

La présente invention a pour but de pallier ces inconvénients et concerne un ensemble de moyens agencés de telle sorte qu'ils soient mobiles donc qu'ils puissent aller au devant des stagiaires, et capables de leur offrir un grand nombre de services.

L'invention concerne plus particulièrement un ensemble mobile destiné à l'entraînement de personnel en vue de sa spécialisation dans la lutte contre le feu, constitué d'un moyen de transport (tracteur) et d'une remorque, cette dernière comprenant un caisson d'exercice dans lequel se trouvent agencés des moyens capables de mettre le personnel en condition réelle de sinistre, cet ensemble étant caractérisé en ce que lesdits moyens comportent au moins un bac contenant un combustible inflammable capable de brûler en produisant des flammes et des calories en quantité importante, qu'il est équipé d'une salle de contrôle et d'observation thermiquement isolée du caisson d'exercice, cette salle contenant des moyens de surveillance et de réaction, en cas d'urgence, contre des risques non programmés encourus par le personnel durant l'entraînement, et que c'est le moyen de transport qui assure à l'ensemble mobile l'essentiel de l'énergie nécessaire à la bonne marche de l'entraînement.

L'invention sera mieux comprise à l'aide des explications qui vont suivre et des figures jointes qui représentent un ensemble mobile conforme à l'invention.

La figure 1 illustre schématiquement un ensemble mobile conforme à l'invention, composé d'un moyen de transport (B), d'une salle de contrôle (C) et d'un caisson d'exercice (A) ; sur cette figure, une paroi latérale de la salle de contrôle (C) a été enlevée, pour en montrer l'intérieur.

La figure 2 montre schématiquement, en vue de côté, et à plus grande échelle, le caisson d'exercice (A) (dont une paroi latérale a été enlevée pour en montrer l'intérieur).

La figure 3 est une vue analogue à la figure 2, montrant l'intérieur du caisson (A) vu de dessus (plafond supposé enlevé).

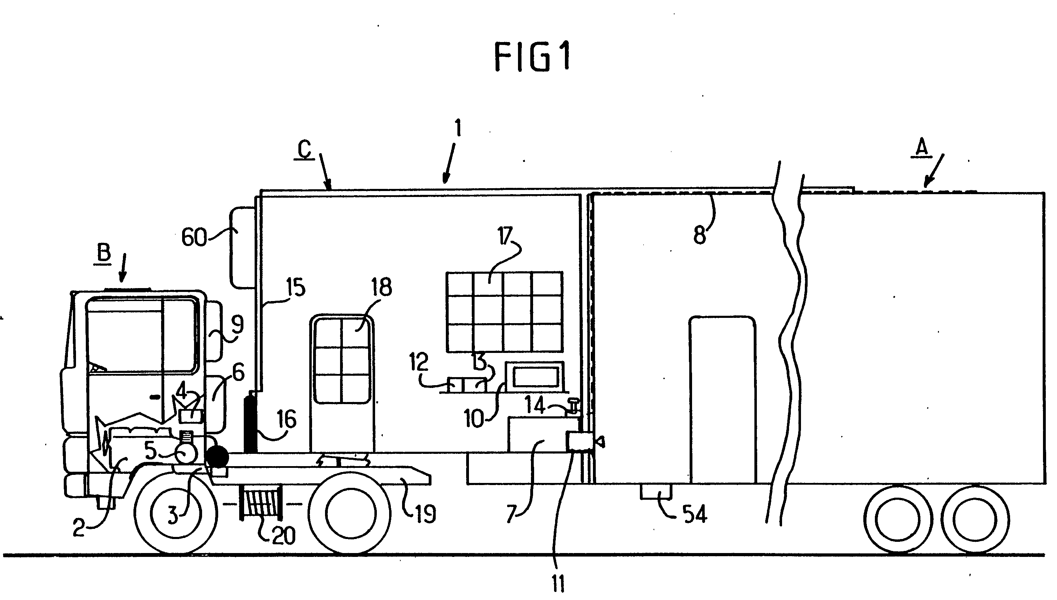

L'ensemble mobile représenté à la figure 1 est un ensemble routier de type traditionnel, de grande longueur, qui est constitué d'un tracteur (B) traînant une remorque 1.

Selon une caractéristique essentielle de l'invention, la remorque 1 comprend un caisson (A), que l'on appelera caisson d'exercice, qui contient une combinaison de moyens agencés de telle sorte qu'ils reproduisent, avec le maximum d'exactitude, tous les paramètres susceptibles d'être rencontrés dans la lutte contre le feu, la structure de ce caisson étant elle-même compatible avec ces paramètres ainsi qu'avec la sécurité du personnel. Le moyen de transport (B) rend mobile le caisson (A) et lui fournit l'essentiel de l'énergie, notamment électrique et hydraulique nécessaire aux séquences de fonctionnement.

Selon une variante préférée de l'invention, une salle de contrôle et d'observation (C) est intercalée entre le moyen de transport (B) et le caisson (A).

Le tracteur routier est d'un type classique, mais, selon l'invention, ses éléments essentiels, à savoir son moteur 2, sa boîte de vitesse 3, et ses batteries 4, sont adaptés pour fournir au caisson (A) et à la salle de contrôle (C) les énergies électrique et hydraulique nécessaires. Ainsi, la prise de force de la boîte de vitesse 3 entraîne un compresseur 5 qui a pour fonction, d'une part d'assurer le remplissage des bouteilles d'air des appareils respiratoires 6, et d'autre part d'assurer la surpression d'une réserve d'eau 7, reliée à une canalisation d'eau 8 (représentée en traits interrompus sur la figure 1.

La batterie 4 fournit l'électricité pour l'éclairage de la salle de contrôle (C) ainsi que pour les appareils de mesure et de contrôle. L'énergie électrique est également assurée au moyen d'un groupe électrogène 9.

La salle de contrôle (C), qui est parfaitement isolée du caisson (A) sur le plan de la chaleur et des risques de propagation de l'incendie ou des fumées, est équipée de moyens de commande et, notamment, d'un écran vidéo 10 retransmettant les images saisies par une caméra 11 assurant la prise de vue à l'intérieur du caisson (A). Cette salle (C) contient également une centrale informatisée 12, chargée de recueillir et de traiter les informations fournies par un réseau de capteurs de température, répartis à différents niveaux dans le caisson (A). A partir de cette centrale, un système de commande 13, asservi aux différents paramètres, permet de contrôler les phases d'extinction automatique, tandis que des commandes manuelles 14 permettent le contrôle de la canalisation 8 (reliée à la réserve d'eau 7) et d'une canalisation 15 reliée à une bouteille de gaz d'extincteur 16, par exemple de halon.

Différents accessoires complémentaires tels, par exemple, qu'une réserve d'eau potable 60 peuvent être prévus. Bien entendu, l'éclairage naturel de la salle de contrôle se fait à travers une fenêtre 17 et son accès à travers une porte 18.

On notera également la présence, sous la plate-forme 19 du tracteur (B) d'une lance à incendie 20 enroulée sur un dévidoir.

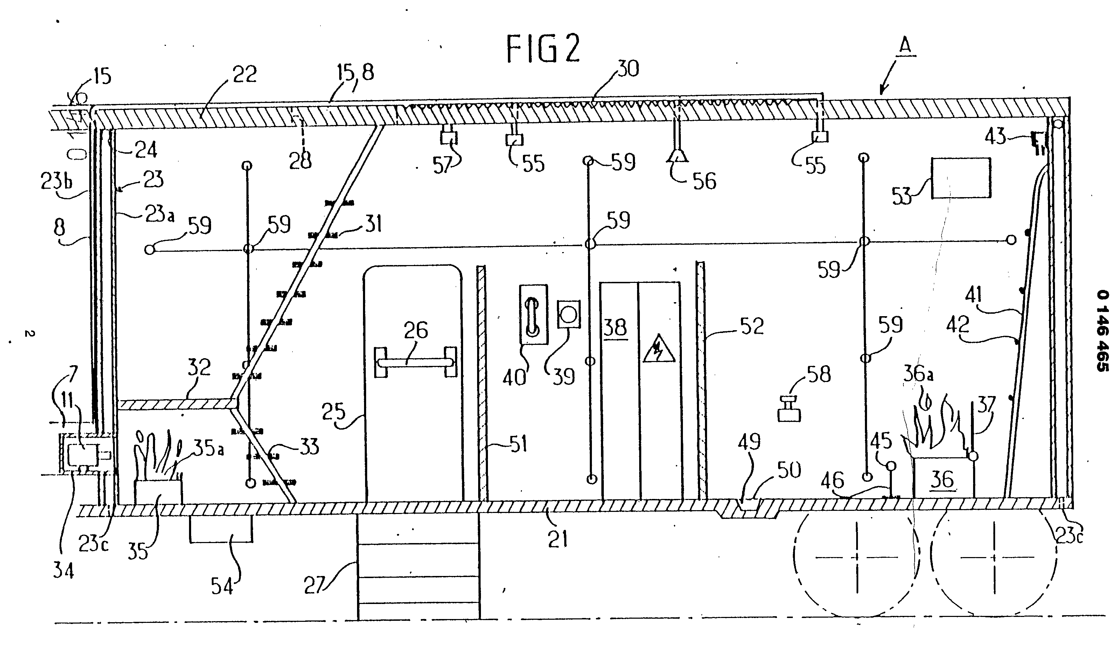

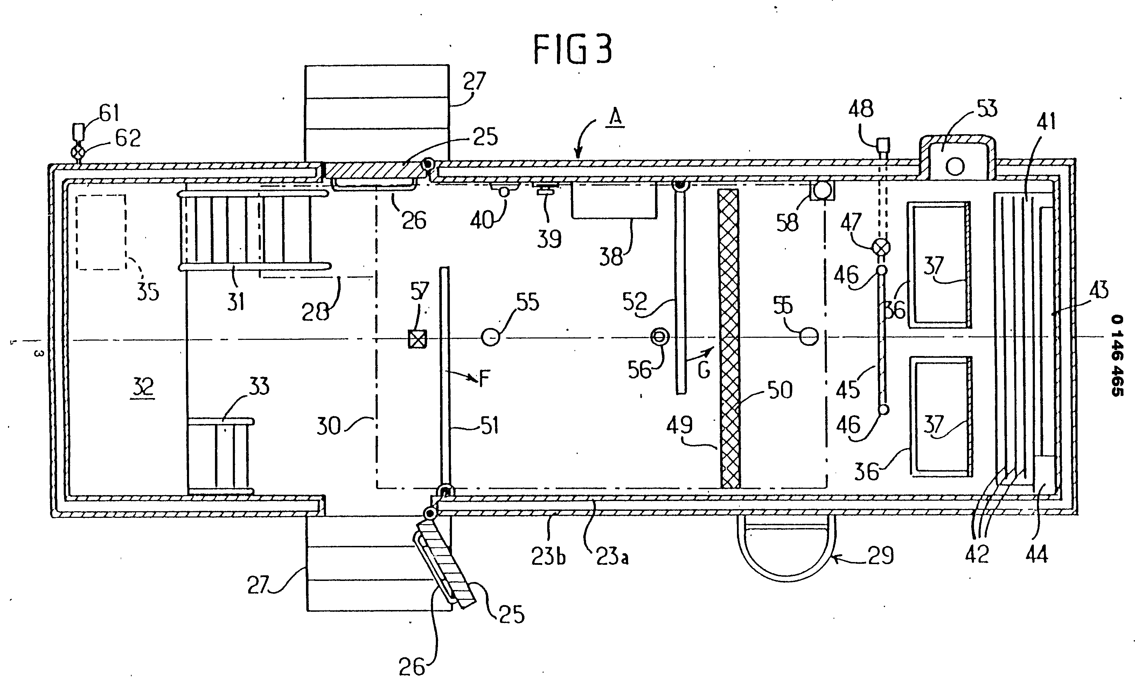

Les figures 2 et 3 représentent en détail l'intérieur du caisson d'exercice (A). Ce dernier comprend un plancher 21, un plafond 22 et une paroi périphérique 23 qui est constituée de deux cloisons parallèles espacées : une cloison intérieure 23a et une cloison extérieure 23b.

La cloison intérieure 23a est en métal. Dans l'espace compris entre les cloisons 23a, 23b, contre le plafond 22, est logé un tuyau souple 24 qui parcourt toute la périphérie du caisson (A). Ce tuyau est percé de trous dirigés vers le bas ; il peut être branché sur la réserve d'eau surpressée 7 de manière à provoquer l'arrosage des cloisons 23a, 23b et à les refroidir.

L'accès au caisson (A) peut se faire au moyen de deux portes latérales 25. Il s'agit de portes pourvues de poignées en forme de barre 26, à ouverture facile par simple pression (poignées « antipanique »).

Des escaliers 27 démontables mènent aux portes latérales 25. Ces escaliers sont enlevés et rangés dans le camion durant le transport.

Il est également possible d'accéder à l'intérieur du caisson (A) par une trappe 28 ménagée sur le plafond 22, et dont le contour a été représenté en traits mixtes sur la figure 3. Dans ce but, le caisson est équipé d'une échelle pourvue d'un arceau de sécurité 29, du type communément désigné « crinoline ». Cette échelle est amovible et est également démontée pour le transport. Elle permet d'accéder au toit du caisson (A), dont une partie 30 a la forme d'une plate-forme présentant des stries ou autres rugosités antidérapantes. Le contour de cette plate-forme d'accès 30 est figuré par un trait mixte sur la figure 3.

La trappe de toit 28 débouche au dessus d'un escalier 31 qui descend sur un plancher intermédiaire 32 situé à l'avant du caisson.

Un second escalier 33, décalé latéralement par rapport au premier descend du plancher intermédiaire 32 au plancher 21.

La caméra de surveillance vidéo 11 est fixée dans la salle (C) au niveau du sol ; elle est protégée mécaniquement et thermiquement par un boîtier 34.

A la partie avant du caisson (A), sous le plancher intermédiaire 32, est installé un bac 35 ; à sa partie arrière sont installés deux bacs 36. Les bacs 35 et 36 sont destinés à recevoir un carburant, tel que du gas-oil, capable de brûler en produisant des flammes 35a, 36a et des calories en quantité importante. Les bacs 36 possèdent des couvercles articulés 37 qui peuvent être refermés automatiquement ou volontairement par des moyens non représentés, à partir du caisson de contrôle (B) afin d'éteindre les feux 36a en cas de nécessité.

Une armoire électrique 38 est fixée contre une paroi latérale du caisson (A). Elle est équipée d'un matériel électrique (non représenté), fictif ou réel, auquel on peut mettre le feu au cours de l'exercice d'entraînement pour procéder ensuite à son extinction. Un boîtier d'arrêt 39 dit « arrêt coup de poing » permet de commander l'arrêt de l'alimentation électrique de l'armoire 38, ou, du moins, de simuler un tel arrêt.

A côté du boîtier 39 est montée une console téléphonique 40, reliée au caisson de contrôle (C) par une ligne téléphonique (non représentée).

A l'arrière des bacs 36, contre la façade arrière du caisson (A), est fixé un panneau incliné 41. Il s'agit d'une plaque de métal, avantageusement pourvue de barrettes transversales 42 et surplombée d'une canalisation 43. Cette dernière est percée de trous dirigés vers le bas et est reliée à un réservoir de carburant 44. En manœuvrant une vanne (non représentée) située à l'intérieur du caisson (A), il est possible d'ouvrir le réservoir 44 pour alimenter en carburant la canalisation percée 43, de manière à faire ruisseler le carburant sur la plaque 41 en vue de simuler un feu de façade, après inflammation du carburant.

Devant les bacs 36 est fixée une rampe de gaz en forme de tube horizontal 45, qui est percé de trous et est fixé au plancher 21 par des pattes latérales 46. L'alimentation de la rampe en gaz inflammable peut être réalisée, par l'intermédiaire d'une vanne 47, au moyen d'un tuyau 48 débouchant à l'extérieur du caisson et pouvant être raccordé à une bouteille de gaz, par exemple une bouteille de butane ou de propane.

En avant de la rampe de gaz 45, le plancher 21 est creusé d'une rigole transversale 49. Celle-ci est recouverte d'une grille destinée à éviter le trébuchement du personnel circulant à l'intérieur du caisson.

Le caisson (A) est équipé d'une chicane constituée de deux volets verticaux 51, 52 décalés selon la direction longitudinale du caisson (A) et articulés chacun à l'une de ses parois latérales. Il est ainsi possible, si on ne souhaite pas utiliser la chicane, de rabattre chacun des volets contre la paroi associée en les faisant pivoter selon les flèches F, G (figure 3).

A l'arrière du caisson, l'une des parois latérales de celui-ci est équipée d'une hotte d'aspiration des fumées 53, laquelle est reliée par un conduit non représenté à un aspirateur électrique 54 monté sous le caisson.

La canalisation d'eau sous pression 8 est raccordé à des têtes d'extinction automatique 55, par exemple au nombre de deux, disposées sous le plafond 22. Ces têtes d'extinction, connues sous le nom de têtes « sprinkler » comportent des capteurs thermovélocinétiques qui sont sensibles à la rapidité d'élévation de la température et qui sont agencés pour commander un arrosage abondant d'eau lorsque cette rapidité excède un seuil prédéterminé.

La canalisation de halon 15 est raccordée à une tête de diffusion 56 également placée sous le plafond 22 ;

La diffusion de halon est commandée automatiquement en cas de danger par un détecteur ionique de fumées 57 également fixé au plafond.

L'installation est complétée par une manette de commande 58 apte à commander la fermeture des couvercles 37 et l'arrosage du caisson en eau au moyen des têtes 55 en cas de danger. Elle comprend également un réseau de capteurs de température (thermocouples) 59 répartis à différents niveaux dans le caisson et agencés pour fournir en permanence des signaux représentatifs de ces températures à la centrale informatisée installée dans le caisson de contrôle (C).

Enfin, on notera l'existence, à l'extérieur du caisson (A), d'un raccordement d'eau 61 et d'une vanne 62 qui permettent, d'une part, l'alimentation en eau de la réserve 7 et, d'autre part, le branchement sur les têtes « sprinkler » 55 d'une installation extérieure (à des fins de démonstration du mode de fonctionnement d'une telle installation).

Nous allons maintenant décrire la manière dont il est possible d'utiliser l'ensemble mobile qui vient d'être décrit pour entraîner un personnel en vue de sa spécialisation dans la lutte contre le feu.

L'ensemble mobile est amené à proximité du lieu où se trouvent les stagiaires à former ou à spécialiser, par exemple dans la cour d'une caserne de sapeur-pompiers.

Les escaliers latéraux 27 et la crinoline 29 sont mis en place sur le caisson (A). Les différents appareils électriques hydrauliques tels que le compresseur 5, la centrale informatisée 12, le système de commande 13 et la caméra vidéo 11 sont mis en marche.

Le déroulement des exercices sera animé et contrôlé en permanence par deux surveillants spécialisés au moins, l'un en régie à l'intérieur de la salle de contrôle (C) et l'autre en compagnie des stagiaires à l'intérieur du caisson d'exercice (A).

Les différentes procédures des exercices essentiels que permet un ensemble selon l'invention sont décrites ci-dessous.

Un premier exercice dit d'accoutumance à la fumée et à la chaleur consiste, après une préparation de mise en condition, à mettre les stagiaires en contact avec une atmosphère très enfumée et une température de l'ordre de 600 °C à hauteur d'homme, et de 35 °C au sol. Pour cela, on enflamme le gas-oil contenu dans les bacs 35 et 36. Le réseau de capteurs 59 contrôlent en permanence l'évolution des températures. Les stagiaires sont couchés par terre et ceci pendant un temps préalablement déterminé et qui peut être d'environ six minutes, par exemple. Le but de cet exercice est de faire prendre conscience aux stagiaires de leurs limites et de vaincre leur propre panique.

Un second exercice a pour but de réaliser l'entraînement des stagiaires à la lutte contre l'incendie sur feux de différentes classes avec tout type de matériel et dans diverses situations d'accès à ces feux.

C'est ainsi qu'il est possible, au moyen de l'armoire électrique 38 de simuler un feu d'origine électrique ; le premier réflexe que les stagiaires devront acquérir pour lutter contre ce feu sera de couper l'alimentation électrique de l'armoire en frappant sur le boîtier d'arrêt « coup de poing » 39, avant de procéder à l'extinction proprement dite.

La rampe 45 permet de réaliser un feu de gaz.

Le panneau 41 permet de simuler un feu de façade. A cet effet, on fait ruisseler sur ce panneau, au moyen de la canalisation percée 43, le carburant provenant du réservoir 44 et on embrase ce carburant. Le ruissellement est ralenti par les barrettes transversales 42, ce qui permet aux flammes de se répartir régulièrement sur le panneau.

En enflammant un carburant placé dans la rigole 49, on peut réaliser un feu de caniveau et obtenir un rideau de flammes.

Les stagiaires sont ainsi placés dans des conditions de sinistre variées et voisines de conditions réelles. Il va de soi que les techniques de défense et de lutte qui leur est enseigné dépend du type de feu rencontré ; pour certains feux on utilisera la lance à incendie 20, pour d'autres des extincteurs, pour d'autres des couvertures mouillées par exemple.

On peut également demander aux stagiaires de rechercher à l'intérieur du caisson, et de ramener en lieu sûr, des mannequins figurant des personnes blessées.

Pour accéder au caisson (A), les exercices peuvent prévoir une entrée des stagiaires par une porte latérale 25 ou par la trappe de toit 28. Dans ce dernier cas, les stagiaires accèdent à la trappe par l'échelle de crinoline 29 puis par la plate-forme 30 ; ils descendent à l'intérieur du caisson en empruntant l'escalier 31, le plancher intermédiaire 32 et l'escalier 33 ; ils procèdent éventuellement à l'extinction du feu 35a situé sous le plancher intermédiaire 32.

Les chicanes amovibles 51, 52 sont des obstacles destinés à accroître la difficulté de leur progression vers le fond du caisson.

Le téléphone 40 réalise une liaison entre le caisson d'exercice et la salle de contrôle ; il permet par exemple à un stagiaire désigné comme chef d'équipe d'intervention de faire un rapport sur la situation à l'intérieur du caisson (A) et l'évolution de la situation ; il permet réciproquement à la régie du caisson de contrôle de donner des instructions aux stagiaires. Ces différentes conversations téléphoniques peuvent être avantageusement enregistrées afin de faire l'objet d'une analyse et d'une critique ultérieures par les instructeurs et par les stagiaires, au cours d'un débat destiné à tirer des enseignements des exercices. La totalité des exercices est surveillée visuellement en régie sur l'écran 10 qui retransmet les images saisies par la caméra vidéo 11 et, éventuellement, par d'autres caméras judicieusement placées dans la salle (B) ou dans le caisson (A). Comme on l'a déjà dit, les températures à différents niveaux du caisson (A) sont connues et contrôlées au moyen du réseau de capteur 59.

En cas d'embrasement accidentel dangereux, la montée brutale en température et le dégagement excessif de fumées qui en résultent provoquent automatiquement et instantanément l'arrosage en eau du caisson par ouverture des têtes « sprinkler » 55 et une arrivée de halon par ouverture du diffuseur 56, de manière à éteindre rapidement l'incendie inopiné.

Par ailleurs, en cas de danger ou de panique, on peut intervenir volontairement, à la fois en salle de contrôle en actionnant la manette 14 et dans le caisson d'exercice en actionnant la manette 58 pour obtenir ce même résultat ; l'actionnement de ces manettes commande en outre la fermeture des couvercles 37, ce qui provoque éventuellement l'arrêt immédiat (par manque d'oxygène) des feux de bacs 36a.

En cas de panique, la sortie rapide des stagiaires est évidemment possible par les portes latérales 25 à ouverture rapide.

On voit donc que tout risque grave non programmé qui pourrait intervenir au cours des divers exercices est immédiatement maîtrisé.

L'aspirateur 54 relié à la hotte 53 permet de désenfumer rapidement le caisson (A) en cours ou en fin d'exercice.

Par ailleurs, il est possible, en cours ou en fin d'exercice, de refroidir les parois du caisson (A) en faisant couler de l'eau — au moyen du tuyau périphérique percé 24 — entre les cloisons 23a, 23b. Cette eau de refroidissement est évacuée par des orifices 23c traversant le plancher du caisson.

Un tel ensemble mobile trouve son application tant sur le plan de la démonstration de l'efficacité de certains matériels spécifiques de la lutte contre l'incendie, que sur le plan de la préparation de ceux qui sont destinés à lutter contre ce type de sinistre.

## Revendications

1. Ensemble mobile destiné à l'entraînement de personnel en vue de sa spécialisation dans la lutte contre le feu, constitué d'un moyen de transport (B) et d'une remorque (1), cette dernière comprenant un caisson d'exercice (A) dans lequel se trouvent agencés des moyens capables de mettre le personnel en condition réelle de sinistre, caractérisé en ce que lesdits moyens comportent au moins un bac (35, 36) contenant un combustible inflammable capable de brûler en produisant des flammes et des calories en quantité importante, qu'il est équipé d'une salle de contrôle et d'observations (C) thermiquement isolée du caisson d'exercice (A), cette salle contenant des moyens de surveillance et de réaction, en cas d'urgence, contre des risques non programmés encourus par le personnel durant l'entraînement, et que c'est le moyen de transport (B) qui assure à l'ensemble mobile l'essentiel de l'énergie nécessaire à la bonne marche de l'entraînement.

2. Ensemble mobile selon la revendication 1, caractérisé en ce que la salle de contrôle et d'observation (C) est intercalée entre le moyen de transport (B) et le caisson (A).

3. Ensemble mobile selon l'une des revendications précédentes, caractérisé en ce que le caisson (A) comporte, pour le personnel, des moyens d'accès par le toit (28), reliés à un escalier (31), et au moins une porte d'accès latérale (25).

4. Ensemble mobile selon l'une des revendications précédentes, caractérisé en ce que l'inflammation des bacs (35, 36) permet d'élever la température dans le caisson d'exercice (A) à 600 °C environ à hauteur d'homme, pour une température au sol de 35 °C environ.

5. Ensemble mobile selon la revendication 4, caractérisé en ce que l'un des bacs (35) est placé sous un plancher intermédiaire (32).

6. Ensemble mobile selon l'une des revendications 4 ou 5, caractérisé en ce que l'un au moins des bacs (36) est pourvu d'un couvercle articulé (37) dont la fermeture peut être commandée à distance.

7. Ensemble mobile selon l'une des revendications précédentes, caractérisé en ce que le caisson (1) comporte au moins une armoire (38) capable d'être embrasée pour simuler un feu d'origine électrique.

8. Ensemble mobile selon l'une des revendications précédentes, caractérisé en ce que le plancher (21) du caisson (A) est pourvu d'une rigole transversale (49) apte à recevoir un carburant susceptible d'être enflammé pour simuler un feu de caniveau.

9. Ensemble mobile selon l'une des revendications précédentes, caractérisé en ce que le caisson (A) comporte un panneau (41) et des moyens (44, 43) aptes à faire ruisseler sur celui-ci un carburant dont l'inflammation permet de simuler un feu de façade.

10. Ensemble mobile selon l'une des revendications précédentes, caractérisé en ce que le caisson (A) comporte une rampe (45) en forme de tube perforé apte à être alimentée en gaz inflammable.

11. Ensemble mobile selon l'une des revendications précédentes, caractérisé en ce qu'une chicane constituée de volets verticaux rabattables (51, 52) est installée à l'intérieur du caisson (A).

12. Ensemble mobile selon l'une des revendications précédentes, caractérisé en ce qu'il est équipé de moyens (12, 8, 55) aptes à détecter la vitesse d'élévation de la température à l'intérieur du caisson (A) et à commander automatiquement un arrosage en eau à l'intérieur dudit caisson lorsque cette vitesse dépasse un seuil critique prédéterminé.

13. Ensemble mobile selon l'une des revendications précédentes, caractérisé en ce qu'il est équipé d'un moyen (57) apte à détecter la densité d'enfumage du caisson (A) et des moyens (16, 15, 56) agencés pour diffuser à l'intérieur dudit caisson un gaz extincteur tel que du halon lorsque la densité dépasse un seuil critique prédéterminé.

14. Ensemble mobile selon l'une des revendications précédentes, caractérisé en ce que le caisson (A) est équipé d'un réseau de capteurs de température (59) répartis à divers niveaux à l'intérieur dudit caisson.

15. Ensemble mobile selon l'une des revendications précédentes, caractérisé en ce que le caisson (A) possède une paroi (23) à double cloison (23a, 23b) et que des moyens (24) montés entre ces deux cloisons sont prévus pour les arroser d'eau afin de refroidir la paroi.

16. Ensemble mobile selon la revendication 2, caractérisé en ce qu'il est équipé d'au moins une caméra vidéo (11) agencée pour filmer l'intérieur du caisson (A) et transmettre en permanence les images saisies à un écran vidéo (10) situé dans la salle de contrôle (C).

17. Ensemble mobile selon la revendication 2, caractérisé en ce qu'il comprend au moins deux manettes de commande (14, 58) situées l'une dans la salle de contrôle et l'autre à l'intérieur du caisson (A), ces manettes étant agencées pour permettre l'extinction rapide d'un embrasement inopiné du caisson (A), au moyen d'eau par des têtes d'arrosage (55) et/ou au moyen de gaz extincteur par une tête de diffusion (55).

**Claims**

1. Mobile unit for the specialised training of personnel in fire-fighting, constituted by transportation means (B) and a trailer (1), the latter comprising an exercise compartment (A) in which are located means capable of providing the actual conditions of a disaster for the personnel, characterised in that the said means comprise at least one container (35, 36) containing an inflammable fuel capable of burning, thus producing considerable quantities of flames and heat, that it is equipped with a control and observation room (C) which is thermally insulated from the exercise compartment (A), this room containing means for surveillance and reaction, in the case of emergency, to non-programmed risks encountered by the personnel during training and that it is the transportation means (B) which assures the mobile unit of the essential energy necessary for the satisfactory progress of the training.

2. Mobile unit according to Claim 1, characterised in that the control and observation room (C) is interposed between the transportation means (B) and the compartment (A).

3. Mobile unit according to one of the preceding Claims, characterised in that the compartment (A) comprises, for the personnel, access means through the roof (28), connected to a staircase (31) and at least one side access door (25).

4. Mobile unit according to one of the preceding Claims, characterised in that the ignition of the containers (35, 36) makes it possible to raise the temperature in the exercise compartment (A) to approximately 600 °C at body height, for a ground temperature of approximately 35 °C.

5. Mobile unit according to Claim 4, characterised in that one of the containers (35) is placed below an intermediate floor (32).

6. Mobile unit according to one of Claims 4 or 5, characterised in that at least one of the containers (36) is provided with a pivoted lid (37) whereof the closure may be remotely controlled.

7. Mobile unit according to one of the preceding Claims, characterised in that the compartment (1) comprises at least one cupboard (38) capable of being set on fire in order to simulate a fire of electrical origin.

8. Mobile unit according to one of the preceding Claims, characterised in that the floor (21) of the compartment (A) is provided with a transverse channel (49) able to receive a fuel which can be set on fire in order to simulate a fire in the drains.

9. Mobile unit according to one of the preceding Claims, characterised in that the compartment (A) comprises a panel (41) and means (44, 43) able to cause a fuel to trickle down the latter, the ignition of which fuel makes it possible to simulate a fire on the front of a building.

10. Mobile unit according to one of the preceding Claims, characterised in that the compartment (A) comprises a ramp (45) in the form of a perforated tube able to be supplied with inflammable gas.

11. Mobile unit according to one of the preceding Claims, characterised in that a baffle (51, 52) constituted by vertical shutters which can be folded back is installed inside the compartment (A).

12. Mobile unit according to one of the preceding Claims, characterised in that it is equipped with means (12, 8, 55) able to detect the speed of the rise in temperature inside the compartment (A) and to automatically control the spraying of water inside the said compartment when this speed exceeds a pre-determined critical threshold.

13. Mobile unit according to one of the preceding Claims, characterised in that it is equipped with means (57) able to detect the density of smoke in the compartment (A) and means (16, 15, 56) provided for diffusing inside the said compartment an extinguishing gas such as halon, when the density exceeds a pre-determined, critical threshold.

14. Mobile unit according to one of the preceding Claims, characterised in that the compartment (A) is equipped with a system of temperature sensors (59) distributed at various levels inside the said compartment.

15. Mobile unit according to one of the preceding Claims, characterised in that the compartment (A) has a wall (23) with a double partition (23a, 23b) and that means (24) mounted between these two partitions are provided for spraying them with water in order to cool the wall.

16. Mobile unit according to Claim 2, characterised in that it is equipped with at least one video camera (11) arranged in order to film the inside of the compartment (A) and to permanently transmit the images obtained to a video screen (10) situated in the control room (C).

17. Mobile unit according to Claim 2, characterised in that it comprises at least two control handles (14, 58) situated one in the control room and the other inside the compartment (A), these handles being provided in order to allow the rapid extinguishing of unexpected burning of the compartment (A), by means of water through spray heads (55) and/or by means of an extinguishing gas through a diffusion head (55).

**Patentansprüche**

1. Mobile Einheit für das Training von Personal zu dessen Spezialisierung auf dem Gebiet der Brandbekämpfung, mit einem Transportmittel (B) und einem Anhänger (1), letzterer mit einem Übungsraum (A) und in diesem angeordneten Einrichtungen, welche in der Lage sind, das Personal in eine echte Notfallsituation zu versetzen, dadurch gekennzeichnet, daß die genannten Einrichtungen wenigstens einen Trog (35, 36) mit einem darin enthaltenen entflammbaren Brennstoff aufweisen, welche unter Erzeugung von Flammen und einer beträchtlichen Wärmemenge verbrennbar ist, daß die Einheit einen thermisch vom Übungsraum (A) isolierten Überwachungs- und Beobachtungsraum (C) aufweist, mit in diesem angeordneten Einrichtungen für die Beobachtung und im Notfall für die Auslösung von Maßnahmen gegen das Personal während des Trainings bedrohende, nicht programmierte Gefahren, und daß das Transportmittel (B) die mobile Einheit mit der für die zügige Durchführung des Trainings notwendigen Energie versorgt.

2. Mobile Einheit nach Anspruch 1, dadurch gekennzeichnet, daß der Überwachungs- und Beobachtungsraum (C) zwischen dem Transportmittel (B) und dem Übungsraum (A) angeordnet ist.

3. Mobile Einheit nach einem der vorstehenden Ansprüche, dadurch gekennzeichnet, daß der Übungsraum (A) für das Personal einen mit einer Treppe (31) verbundenen Zugang durch die Decke (28) und wenigstens eine seitliche Zugangstür (25) aufweist.

4. Mobile Einheit nach einem der vorstehenden Ansprüche, dadurch gekennzeichnet, daß das Entzünden der Tröge (35, 36) das Erhöhen der Temperatur innerhalb des Übungsraums (A) auf ca. 600 °C in Kopfhöhe bei einer Temperatur von ca. 35 °C am Boden erlaubt.

5. Mobile Einheit nach Anspruch 4, dadurch gekennzeichnet, daß einer (35) der Tröge unter einem Zwischenboden (32) angeordnet ist.

6. Mobile Einheit nach einem der Ansprüche 4 und 5, dadurch gekennzeichnet, daß wenigstens einer (36) der Tröge mit einem daran angelenkten Deckel (37) versehen ist, dessen Schließen ferngesteuert bewirkbar ist.

7. Mobile Einheit nach einem der vorstehenden Ansprüche, dadurch gekennzeichnet, daß der Übungsraum (1) wenigstens einen Schrank (38) enthält, welcher zur Darstellung eines Brands elektrischen Ursprungs in Brand setzbar ist.

8. Mobile Einheit nach einem der vorstehenden Ansprüche, dadurch gekennzeichnet, daß der Boden (21) des Übungsraums (A) mit einer quer verlaufenden Rinne (49) versehen ist, welche mit einem Brennstoff beschickbar ist, welcher zur Darstellung eines Kanalbrands entflammbar ist.

9. Mobile Einheit nach einem der vorstehenden Ansprüche, dadurch gekennzeichnet, daß der Übungsraum (A) eine Wandplatte (41) und Einrichtungen (44, 43) zum Berieseln derselben mit einem Brennstoff enthält, durch dessen Entzünden ein Fassadenbrand darstellbar ist.

10. Mobile Einheit nach einem der vorstehenden Ansprüche, dadurch gekennzeichnet, daß der Übungsraum (A) einen Brenner (45) in Form einer perforierten Rohrs enthält, welcher mit einem entflammbaren Gas beschickbar ist.

11. Mobile Einheit nach einem der vorstehenden Ansprüche, dadurch gekennzeichnet, daß im Inneren des Übungsraums (A) ein aus umlegbaren senkrechten Trennwänden (51, 52) gebildetes Labyrinth installiert ist.

12. Mobile Einheit nach einem der vorstehenden Ansprüche, dadurch gekennzeichnet, daß sie mit Einrichtungen (12, 8, 55) zum Bestimmen der Geschwindigkeit des Temperaturanstiegs im Inneren des Übungsraums (A) und zum automatischen Auslösen der Berieselung des Inneren des Übungsraums mit Wasser bei Überschreitung eines vorbestimmten Schwellenwerts dieser Geschwindigkeit ausgerüstet ist.

13. Mobile Einheit nach einem der vorstehenden Ansprüche, dadurch gekennzeichnet, daß sie mit einer Einrichtung (57) zum Bestimmen der Rauchdichte im Inneren des Übungsraums (A) und Einrichtungen (16, 15, 56) zum Einblasen eines Löschgases, z. B. Halon, in das Innere des Übungsraums bei Überschreiten eines vorbestimmten kritischen Schwellenwerts der Rauchdichte ausgerüstet ist.

14. Mobile Einheit nach einem der vorstehenden Ansprüche, dadurch gekennzeichnet, daß der Übungsraum (A) mit einem Netz von Temperaturfühlern (59) ausgerüstet ist, welche in verschiedenen Höhen im Inneren des Übungsraums verteilt sind.

15. Mobile Einheit nach einem der vorstehenden Ansprüche, dadurch gekennzeichnet, daß der Übungsraum (A) eine Doppelwand (23) mit zwei Wandelementen (23a, 23b) aufweist, und daß zwischen den beiden Wandelementen Einrichtungen für ihre Berieselung mit Wasser zum Kühlen der Wand angeordnet sind.

16. Mobile Einheit nach Anspruch 2, dadurch gekennzeichnet, daß sie mit wenigstens einer Videokamera (11) ausgerüstet ist, welche zum Filmen des Inneren des Übungsraums (A) und zum fortlaufenden Übermitteln des aufgenommenen Bilds an einen im Überwachungsraum (C) angeordneten Bildschirm (10) eingerichtet ist.

17. Mobile Einheit nach Anspruch 2, dadurch gekennzeichnet, daß sie wenigstens zwei Betätigungstasten (14, 58) aufweist, von denen eine im Überwachungsraum (C) und die andere im Inneren des Übungsraums (A) angeordnet ist, und welche zum schnellen Löschen eines unbeabsichtigten Brands des Übungsraums (A) mittels über Berieselungsköpfe (55) zugeführten Wassers und-/oder mittels über einen Diffusorkopf (55) eingeblasenen Löschgases betätigbar sind.

# FIG 1

0 146 465

# FIG 2

0 146 465

# FIG 3

0 146 465